# EUROPÄISCHE PATENTSCHRIFT

(11) **EP 2 106 975 B1**
(45) Veröffentlichungstag und Bekanntmachung des Hinweises auf die Patenterteilung: **09.06.2010**
(21) Anmeldenummer: 08006744.0
(22) Anmeldetag: 02.04.2008
(51) Int. Cl.: B60R 21/264

(54) **Gehäuseanordnung für einen Gasgenerator**
Casing unit for a gas generator
Agencement de boîtier pour un générateur à gaz

(43) Veröffentlichungstag der Anmeldung: 07.10.2009
(73) Patentinhaber: Delphi Technologies, Inc., Troy, Michigan 48007 (US)
(72) Erfinder: Bayer, Karl, 92348 Berg (DE); Gärtner, Jochem, 90408 Nürnberg (DE); Blessing, Uwe, 90409 Nürnberg (DE)
(74) Vertreter: Denton, Michael John

(56) Entgegenhaltungen:
- EP-A- 0 653 336
- EP-A- 1 477 375
- DE-A1- 10 338 928
- DE-A1-102004 060 838
- US-A1- 2004 207 188
- US-A1- 2007 273 132

## Beschreibung

Die vorliegende Erfindung betrifft eine Gehäuseanordnung für einen Gasgenerator, insbesondere für Luftsackmodule in Kraftfahrzeugen, mit einem inneren vorzugsweise zylindrischen Gehäuse zur Aufnahme einer Treibladung, einer das innere Gehäuse umfangsseitig umgebenden Filtereinheit und einem das innere Gehäuse und die Filtereinheit umgebenden äußeren Gehäuse, wobei sowohl das innere Gehäuse als auch das äußere Gehäuse eine Ausströmöffnung aufweist, durch welche die bei der Verbrennung der Treibladung im inneren Gehäuse entstehenden Gase aus der Gehäuseanordnung zum Aufblasen eines Luftsacks herausströmen können.

Da die bei der Verbrennung der Treibladung frei werdenden Gase verhältni smäßig heiß und mit Verbrennungsrückständen beladen sein können, wird bei Gasgeneratoren üblicherweise eine Filtereinheit vorgesehen, durch die die hindurchströmenden Verbrennungsgase gereinigt werden. Darüber hinaus erfolgt beim Durchströmen einer derartigen Filtereinheit ein Wärmeaustausch mit dem hindurchströmenden Verbrennungsgas, sodass dieses gleichzeitig in der gewünschten Weise gekühlt wird.

Da jedoch die Ausströmöffnungen des äußeren Gehäuses bei bekannten Gasgeneratoren in aller Regel radial fluchtend zu den entsprechenden Ausströmöffnungen des inneren Gehäuses angeordnet sind, ist der Filterweg für die Gase verhältnismäßig kurz, da diese die zwischen dem inneren Gehäuse und dem äußeren Gehäuse angeordnete Filtereinheit ausschließlich in radialer Richtung durchströmen. Derartige Gasgeneratoren, bei denen die Ausströmöffnungen des inneren Gehäuses radial ausgerichtet sind, sind beispielsweise bekannt aus: EP 0 653 336 A1, DE 10 2004 060 838 A1, DE 103 38 928 A1, US 2007/0273132 A1, US 2004/0207188 A1. Dementsprechend ist die Kühl- und Filterwirkung bekannter Gasgeneratoren verhältnismäßig gering. Diese ausschließlich radiale Durchströmung der Filtereinheit bringt darüber hinaus den zusätzlichen Nachteil mit sich, dass infolge der ausschließlich radialen Durchströmung die Filtereinheit nicht vollständig genützt wird, was gleichzeitig in unerwünschter Weise eine thermische Überlastung der Filtereinheit bedeuten kann.

Der in der EP 0 653 336 A1 beschriebene Gasgenerator weist die Merkmale des Oberbegriffs des Anspruchs 1 auf. Allerdings wird dessen Filter von den Gasen nur über einen Winkel von 90° durchströmt.

Zwar wäre es zur Kompensierung dieser Nachteile möglich, die radiale Ausdehnung der Filtereinheit zu vergrößern. Eine derartige Vergrößerung der Filtereinheit ist jedoch aufgrund der damit verbundenen zusätzlichen Kosten sowie dem gesteigerten Platzbedarf in aller Regel nicht akzeptabel.

Dementsprechend liegt der Erfindung die Aufgabe zugrunde, eine Gehäuseanordnung für einen Gasgenerator zu schaffen, welche eine Maximierung der Filter- und Kühlwirkung einer Filtereinheit ohne eine Vergrößerung deren radiale Abmessungen ermöglicht.

Diese Aufgabe wird mit einer Gehäuseanordnung für einen Gasgenerator gelöst, welche die Merkmale des Anspruchs 1 oder alternativ die Merkmale des Anspruchs 10 aufweist. Sowohl der Gehäuseanordnung gemäß Anspruch 1 als auch der Gehäuseanordnung gemäß Anspruch 10 liegt dabei der grundlegende Gedanke zugrunde, dass die Filter- und Kühlwirkung der Filtereinheit dadurch gesteigert werden kann, dass diese nicht nur auf direktem radialen Wege durchströmt wird; vielmehr liegt der Erfindung die Erkenntnis zugrunde, dass die Kühl- und Filterwirkung dadurch gesteigert werden kann, dass die Filtereinheit in zumindest einer der beiden anderen Zylinderkoordinatenrichtungen - also in Umfangsrichtung bzw. alternativ in axialer Richtung - durchströmt wird.

Bei der Gehäuseanordnung gemäß Anspruch 1 ist es vorgesehen, dass die in den jeweiligen Umfangswänden des inneren Gehäuses und des äußeren Gehäuses vorgesehenen Ausströmöffnungen derart relativ zueinander angeordnet sind, dass die Filtereinheit von den aus dem inneren Gehäuse ausströmenden Gasen in Umfangsrichtung der Gehäuseanordnung durchströmt werden kann. Hierbei, wäre es wünschenswert, die Filtereinheit mit den aus dem inneren Gehäuse ausströmenden Gasen über eine Bogenlänge durchströmen zu können, welche annähernd einem Winkel von 360° entspricht. Damit bei einer entsprechenden Anordnung der Ausströmöffnung des inneren Gehäuses und des äußeren Gehäuses die aus dem inneren Gehäuse ausströmenden Gase jedoch nicht auf dem direkten Weg von der Ausströmöffnung des inneren Gehäuses zu der Ausströmöffnung des äußeren Gehäuses strömen, ist es erfindungsgemäß vorgesehen, dass in dem Ringspalt zwischen dem inneren Gehäuse und dem äußeren Gehäuse ein sich in axialer Richtung der Gehäuseanordnung erstreckendes Strömungshindernis vorgesehen und derart angeordnet ist, dass die Filtereinheit von den aus dem inneren Gehäuse ausströmenden Gasen nur in einer einzigen Umfangsrichtung durchströmbar ist. Dies erweist sich insbesondere dann als vorteilhaft, wenn die Ausströmöffnung des äußeren Gehäuses und die Ausströmöffnung des inneren Gehäuses in Umfangsrichtung sehr nah beieinander angeordnet sind und das Strömungshindernis in Umfangsrichtung betrachtet zwischen den beiden Ausströmöffnungen angeordnet ist, da dann das aus dem inneren Gehäuse ausströmende Gas dazu gezwungen wird, die Filtereinheit in Umfangsrichtung betrachtet auf dem längeren Weg zu durchströmen.

Die aus dem inneren Gehäuse ausströmenden Gase strömen also nicht direkt in radialer Richtung durch die Filtereinheit hindurch, um auf kürzestem Wege aus dem äußeren Gehäuse auszutreten; vielmehr treten die aus dem inneren Gehäuse austretenden Gase in radialer Richtung in die Filtereinheit ein, welche sie dann in Umfangsrichtung der Gehäuseanordnung durchströmen, bevor sie aus der Ausströmöffnung des äußeren Gehäuses austreten können. Zur Steigerung der Kühl- und Filterwirkung ist es somit nicht erforderlich, die radiale Abmessung der Filtereinheit zu vergrößern. Vielmehr kann die radiale Abmessung der Filtereinheit beibehalten oder sogar reduziert werden, da die Kühl- und Filterwirkung dadurch gesteigert wird, dass die Ausströmöffnung des inneren Gehäuses möglichst weit von der Ausströmöffnung des äußeren Gehäuses in Umfangsrichtung entfernt ist, da dadurch die aus dem inneren Gehäuse ausströmenden Gase vor dem Ausströmen aus dem äußeren Gehäuse einen längeren Filterweg zurücklegen müssen. Da die Gase hierbei entlang der Umfangswandungen des inneren und des äußeren Gehäuses entlang strömen, tritt dabei nicht nur ein intensiver Wärmeaustausch mit der Filtereinheit, sondern insbesondere auch mit den beiden Gehäusewandungen auf, was eine besonders effektive Kühlung der Gase bedeutet.

Gemäß einer bevorzugten Ausführungsform der vorliegenden Erfindung können die Ausströmöffnungen des inneren Gehäuses und des äußeren Gehäuses in Umfangsrichtung der Gehäuseanordnung derart versetzt und relativ zueinander angeordnet sein, dass die Filtereinheit von den aus dem inneren Gehäuse ausströmenden Gasen vor dem Ausströmen aus dem äußeren Gehäuse in Umfangsrichtung der Gehäuseanordnung über eine Bogenlänge durchströmbar ist, welche einen Winkel von zumindest 45° entspricht. Zwar kann unter Umständen bereits bei einer Durchströmung der Filtereinheit über eine Bogenlänge, welche einem kleineren Winkel als 45° entspricht, eine gute Kühl- und Filterwirkung erzielt werden, jedoch erweist es sich als vorteilhaft, die Filtereinheit über eine Bogenlänge zu durchströmen, welche einem größeren Winkel als 45° entspricht.

Grundsätzlich wäre es wünschenswert, die Filtereinheit über eine Bogenlänge zu durchströmen, welche einem Winkel von annähernd 360° entspricht. Da ein derartige Durchströmung der Filtereinheit jedoch nur mit Hilfe zusätzlicher Maßnahmen sichergestellt werden kann, worauf im Folgenden noch genauer eingegangen wird, ist es gemäß einer besonders bevorzugten Ausführungsform vorgesehen, dass die Ausströmöffnungen des inneren Gehäuses und des äußeren Gehäuses derart relativ zueinander angeordnet sind, dass die Filtereinheit von den aus dem inneren Gehäuse ausströmenden Gasen vor dem Ausströmen aus dem äußeren Gehäuse in Umfangsrichtung der Gehäuseanordnung über eine Bogenlänge durchströmbar ist, welche einen Winkel von genau 180° entspricht. Hierzu kann in der Umfangswand des inneren Gehäuses und in der Umfangswand des äußeren Gehäuses jeweils genau eine Ausströmöffnung ausgebildet sein, wobei die Ausströmöffnung des inneren Gehäuses unter einem Winkel von 180° versetzt zu der Ausströmöffnung des äußeren Gehäuses angeordnet ist.

Da die Ausströmöffnung des inneren Gehäuses und des äußeren Gehäuses somit auf einander gegenüberliegenden Seiten der Gehäuseanordnung angeordnet sind, erfährt die Gehäuseanordnung infolge der aus diesen beiden Öffnungen austretenden Gasen zwei einander entgegengerichtete Impulskräfte, sodass die Gehäuseanordnung im Wesentlichen schubneutral ist.

Die Schubneutralität der erfindungsgemäßen Gehäuseanordnung kann gemäß einer weiteren Ausführungsform noch weiter verbessert werden, indem sowohl in der Umfangswand des inneren Gehäuses als auch in der Umfangswand des äußeren Gehäuses jeweils zwei auf gegenüberliegenden Seiten des jeweiligen Gehäuses befindliche Ausströmöffnungen ausgebildet sind, wobei die Ausströmöffnungen des inneren Gehäuses jeweils unter einem Winkel von 90° versetzt zu den Ausströmöffnungen des äußeren Gehäuses angeordnet sind. Bei dieser Ausführungsform heben sich sowohl die beim Ausströmen aus dem inneren Gehäuse auftretenden Impulskräfte als auch die beim Austreten aus dem äußeren Gehäuse auftretenden Impulskräfte auf, sodass bei der Aktivierung eines Gasgenerators mit der erfindungsgemäßen Gehäuseanordnung keine resultierende Impulskraft auf diesen einwirkt.

Zwar kann das Strömungshindernis durch einen sich in axialer Richtung der Gehäuseanordnung erstreckenden separaten bzw. zusätzlichen Körper gebildet werden; da hierdurch jedoch das Gesamtgewicht der Gehäuseanordnung in unerwünschter Weise zunimmt, ist es gemäß einer bevorzugten Ausführungsform vorgesehen, dass das Strömungshindernis durch eine sich in axialer Richtung der Gehäuseanordnung erstreckende radiale Erweiterung des inneren Gehäuses gebildet wird. Die radiale Erstreckung dieser Erweiterung ist dabei so gewählt, dass das innere Gehäuse im Bereich der radialen Erweiterung mit dem äußeren Gehäuse in Anlage gelangt, sodass an dieser Stelle eine Gasströmung in Umfangsrichtung verhindert wird.

Bei der Filtereinheit kann es sich grundsätzlich um annähernd beliebig ausgebildete Metallfilter handeln. Beispielsweise kann die Filtereinheit als ein Metallgewebefilter ausgebildet sein, welcher aus mehreren Wickellagen aus Drahtmattengewebe (mit und ohne Tressen) aufgebaut sein kann.

Ebenfalls wäre es möglich, die Filtereinheit in Form eines gepressten Drahtgestricks auszubilden, welches aus einem zu einer Art Strumpf verarbeiteten Metalldraht besteht, und welcher anschließend verpresst wurde. Ebenfalls wäre es möglich, die Filtereinheit in Form eines gewickelten Flachdrahtfilters auszubilden, welcher aus einem zu einer Spule aufgewickelten Flachdraht besteht, bei der die einzelnen Windungen geringfügig voneinander beabstandet sind.

Da die voran genannten Drahtfilter in der Herstellung jedoch verhältnismäßig kostenintensiv sind und darüber hinaus eine relativ große radiale Erstreckung aufweisen, ist es gemäß einer weiteren bevorzugten Ausführungsform vorgesehen, dass die Filtereinheit durch ein Streckblech bzw. ein Streckgitter oder durch ein mit rasterförmig angeordneten Ausformungen versehenes Blech gebildet wird, welches nur einlagig in dem Ringspalt zwischen dem inneren Gehäuse und dem äußeren Gehäuse angeordnet ist. Bei den Ausformungen des genannten Blechs kann es sich beispielsweise um aus dem Blech ausgestanzte Nasen handeln, welche wie bei einem Reibeisen ein- oder beidseitig aus der Blechebene herausragen, sodass die Gase durch die so erzeugten Öffnungen in dem Blech hindurchströmen können.

Wie bereits zuvor erläutert wurde, ist es bei der erfindungsgemäßen Gehäuseanordnung vorgesehen, dass das innere Gehäuse und das äußere Gehäuse jeweils nur eine oder zwei Ausströmöffnungen besitzen. Damit die bei der Verbrennung der von dem inneren Gehäuse aufgenommenen Treibladung frei werdenden Gase dennoch innerhalb kürzester Zeit aus dem inneren Gehäuse und aus dem äußeren Gehäuse ausströmen können, ist es gemäß einer weiteren Ausführungsform vorgesehen, dass die Ausströmöffnung des inneren Gehäuses eine in Umfangsrichtung längliche, schlitzförmige Gestalt aufweist wohingegen sich die Ausströmöffnung des äußeren Gehäuses aus mehreren in axialer Richtung des äußeren Gehäuses zueinander benachbarten, lokal gruppierter Ausströmlöchern zusammensetzt. Die schlitzförmige Ausgestaltung der Ausströmöffnung des inneren Gehäuses erweist sich dabei insbesondere dann als vorteilhaft, wenn die Gehäuseanordnung in axialer Richtung betrachtet eine verhältnismäßig gedrungene Gestalt aufweist, da dann in axialer Richtung nur verhältnismäßig wenig Platz für die Ausbildung der Ausströmöffnung zur Verfügung steht. Demgegenüber erweist es sich als vorteilhaft, die Ausströmöffnung des äußeren Gehäuses aus mehreren kleineren Ausströmlöchern zu bilden, da hierdurch gleichzeitig eine Diffusorwirkung erzielt werden kann.

Alternativ zu der Gehäuseanordnung nach Anspruch 1 ist es bei der Gehäuseanordnung nach Anspruch 10 vorgesehen, dass dessen Filtereinheit von dem aus dem inneren Gehäuse ausströmenden Gas über eine möglichst große Strecke in axialer Richtung der Gehäuseanordnung durchströmbar ist. Hierzu ist das innere Gehäuse in axialer Richtung einseitig offen, wobei in der Umfangswand des äußeren Gehäuses mehrere Ausströmöffnungen ausgebildet sind, welche relativ zu oder offenen Seite des inneren Gehäuses derart angeordnet sind, dass die Filtereinheit von den aus der offenen Seite des inneren Gehäuses ausströmenden Gasen in axialer Richtung der Gehäuseanordnung im Wesentlichen vollständig durchströmbar ist.

Dadurch, dass das innere Gehäuse in axialer Richtung einseitig offen ist, strömen somit die daraus ausströmenden Gase bis an eine axiale Endbegrenzung des äußeren Gehäuses, von wo aus sie in dem Ringspalt zwischen dem inneren Gehäuse und dem äußeren Gehäuse bzw. in dem darin angeordneten Filter bis zu der der genannten Endbegrenzung befindlichen Stirnwand des äußeren Gehäuses strömen, um dort aus dem äußeren Gehäuse auszutreten, wozu vorzugsweise in der Umfangswand benachbart zu der genannten Stirnwand die genannten Ausströmöffnungen vorgesehen sein können. Durch die einseitig offene Ausbildung des inneren Gehäuses kann ferner sichergestellt werden, dass sich die Gase über den gesamten Innenumfang des äußeren Gehäuses verteilen können und somit den Gehäuseaufbau nicht in in Umfangrichtung begrenzten Bereichen durchströmen.

Damit die Gase aus dem inneren Gehäuse, ohne zusätzliche radiale Ausströmöffnungen vorsehen zu müssen, sowohl in axialer als auch gleichzeitig in radialer Richtung ausströmen können, kann das innere Gehäuse in axialer Richtung eine geringere Länge als sowohl das äußere Gehäuse als auch die Filtereinheit aufweisen. Diese Ausführungsform ermöglicht es, dass die Gase, sobald sie aus dem inneren Gehäuse in axialer Richtung ausströmen, in die Filtereinheit eintreten können, um von dieser in axialer Richtung zu den Ausströmöffnungen des äußeren Gehäuses geleitet zu werden.

Bei dem inneren Gehäuse kann es sich beispielsweise um ein zylindrisches Rohr handeln, welches konzentrisch von dem äußeren Gehäuse aufgenommen wird und dabei direkt mit der Stirnwand des äußeren Gehäuses, im Bereich derer die Ausströmöffnungen des äußeren Gehäuses vorgesehen sind, verbunden ist. Ebenfalls wäre es jedoch möglich, das innere Gehäuse an der der offenen Seite in axialer Richtung gegenüberliegenden Seite durch einen Boden bzw. Deckel zu verschließen, welcher sich in Anlage mit der genannten Stirnwand des äußeren Gehäuses befindet.

Auch bei der hier in Rede stehenden Ausführungsform der erfindungsgemäßen Gehäuseanordnung, bei der die Filtereinheit in axialer Richtung durchströmt wird, ist es grundsätzlich möglich, die Filtereinheit in Form der bereits zuvor erwähnten Drahtfilter auszubilden. Besonders vorteilhaft erweist es sich jedoch auch hier, die Filtereinheit durch ein Streckblech bzw. Streckgitter oder durch ein mit rasterförmig angeordneten Ausformungen versehenes Blech auszubilden, welches einlagig in dem Ringspalt zwischen dem inneren Gehäuse und dem äußeren Gehäuse angeordnet ist, da hierdurch die Abmessungen der erfindungsgemäßen Gehäuseanordnung in der gewünschten Weise gering gehalten werden können.

Im Folgenden wird die Erfindung unter Bezugnahme auf die beigefügten Figuren näher erläutert. In sämtlichen Figuren sind gleiche oder einander entsprechende Elemente mit gleichen Bezugsziffern gekennzeichnet, wobei:
- Fig. 1: einen radialen Schnitt durch eine in Umfangsrichtung durchströmbare Gehäuseanordnung gemäß einer ers- ten Ausführungsform zeigt;
- Fig. 2: einen axialen Schnitt durch eine in axialer Richtung durchströmbare Gehäuseanordnung gemäß einer drit- ten Ausführungsform zeigt; und
- Fig. 3: eine perspektivische Schnittdarstellung eines Gasgene- rators unter Verwendung der Gehäuseanordnung der Fig. 2 zeigt.

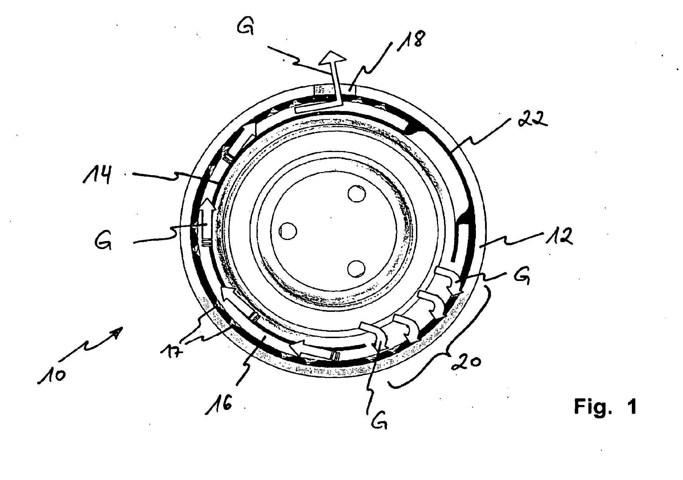

Die in der Fig. 1 dargestellte Gehäuseanordnung 10 umfasst ein äußeres hohlzylindrisches Gehäuse 12, welches in axialer Richtung beidseitig verschlossen ist. Innerhalb des äußeren Gehäuses 12 ist im Wesentlichen konzentrisch dazu ein inneres im Wesentlichen hohlzylindrisches Gehäuse 14 angeordnet, welches sich in axialer Richtung über die gesamte Länge des äußeren Gehäuses 12 hinweg erstreckt und somit mit seinen beiden in axialer Richtung einander gegenüberliegenden Stirnseiten an den axialen Endbegrenzungen des äußeren Gehäuses 12 dicht anliegt. Darüber hinaus umfasst die Gehäuseanordnung 10 eine Filtereinheit 16, welche in dem zwischen dem äußeren Gehäuse 12 und dem inneren Gehäuse 14 gebildeten Ringspalt angeordnet ist.

Wie der Fig. 1 entnommen werden kann, weist das äußere Gehäuse 12 in seiner Umfangswand eine einzige Ausströmöffnung 18 auf, welche sich aus einer Vielzahl in axialer Richtung zueinander benachbarter, lokal gruppierter Ausströmlöcher (nicht erkennbar) zusammensetzt. Das innere Gehäuse 14 weist ebenfalls eine Ausströmöffnung 20 auf, welche eine in Umfangsrichtung längliche, schlitzförmige Gestalt besitzt. In der erfindungsgemäßen Art und Weise sind die Ausströmöffnungen 18, 20 nicht radial fluchtend sondern vielmehr unter einem Winkel von etwa 220° versetzt zueinander angeordnet.

Die Ausströmöffnungen 18, 20 sind dabei deshalb unter einem möglichst großen Winkel versetzt zueinander angeordnet, damit die aus dem inneren Gehäuse 14 durch dessen Ausströmöffnung 20 ausströmenden Gase G einen möglicht langen Weg zurücklegen müssen, bevor sie das äußere Gehäuse 12 durch dessen Ausströmöffnung 18 verlassen können.

Ein derartig langer Strömungsweg der Gase G ist deshalb wünschenswert, damit die in dem Ringspalt zwischen dem inneren Gehäuse 14 und dem äußeren Gehäuse 12 strömenden Gase G möglichst lange mit der Filtereinheit 16 und den Umfangswandungen des inneren und des äußeren Gehäuses 14, 12 in Berührung stehen, um möglichst stark abgekühlt und von etwaigen Verbrennungsrückständen gereinigt zu werden. Die Kühlwirkung wird dabei insbesondere durch den Wärmeaustausch der Gase mit der metallisch ausgebildeten Filtereinheit sowie den Umfangswandungen des äußeren und des inneren Gehäuses 12, 14 erreicht.

Die Filterwirkung beruht dahingegen im Wesentlichen auf der Filterwirkung der Filtereinheit 16, welche in der dargestellten Ausführungsform durch ein mit rasterförmig angeordneten nasenförmigen Ausformungen 17 versehenes Blech gebildet wird, welches einlagig in dem Ringspalt zwischen dem inneren Gehäuse 14 und dem äußeren Gehäuse 12 angeordnet ist. Bei den nasenförmigen Ausformungen 17 der Filtereinheit 16 kann es sich dabei beispielsweise um in das Blech der Filtereinheit eingeprägte und aus der Blechebene heraus gebogene Blechabschnitte handeln, sodass die Filtereinheit 16 im Bereich der jeweiligen Ausformung 17 eine kleine Öffnung besitzt, durch die die Gase G die Filtereinheit 16 in radialer Richtung durchströmen können. Die aus der Blechebene heraus gebogenen Ausformungen 17 dienen somit als Rückhaltemittel für die von den Gasen G transportierten Verbrennungsrückstände, sodass die Gase G im Wesentlichen frei von jeglichen Verbrennungsrückständen aus der Ausströmöffnung 18 des äußeren Gehäuses 12 ausströmen können.

Damit die aus der Ausströmöffnung 20 des inneren Gehäuses 14 ausströmenden Gase tatsächlich auch über den gewünschten langen Filterweg zu der Ausströmöffnung 18 des äußeren Gehäuses 12 strömen, ist in dem Ringspalt zwischen dem äußeren Gehäuse 12 und dem inneren Gehäuse 14 ein sich in axialer Richtung der Gehäuseanordnung 10 erstreckendes Strömungshindernis vorgesehen, welches in der dargestellten Ausführungsform durch eine sich in axialer Richtung der Gehäuseanordnung 10 erstreckende radiale Erweiterung 22 des inneren Gehäuses 14 gebildet wird. Die radiale Erweiterung 22 steht dabei mit dem äußeren Gehäuse 12 in Anlage, sodass die Gase G an der radialen Erweiterung 22 nicht vorbeiströmen können. Die radiale Erweiterung 22 des inneren Gehäuses 14 ist dabei insbesondere derart zwischen der Ausströmöffnung 18 des äußeren Gehäuses und der Ausströmöffnung 20 des inneren Gehäuses 14 angeordnet, dass die aus der Ausströmöffnung 20 des inneren Gehäuses 14 ausströmenden Gase G dazu gezwungen sind, die Filtereinheit 16 auf dem langen Strömungsweg zu durchströmen, welcher einem Winkel von etwa 220° entspricht, unter dem die Ausströmöffnungen 18, 20 versetzt zueinander angeordnet sind.

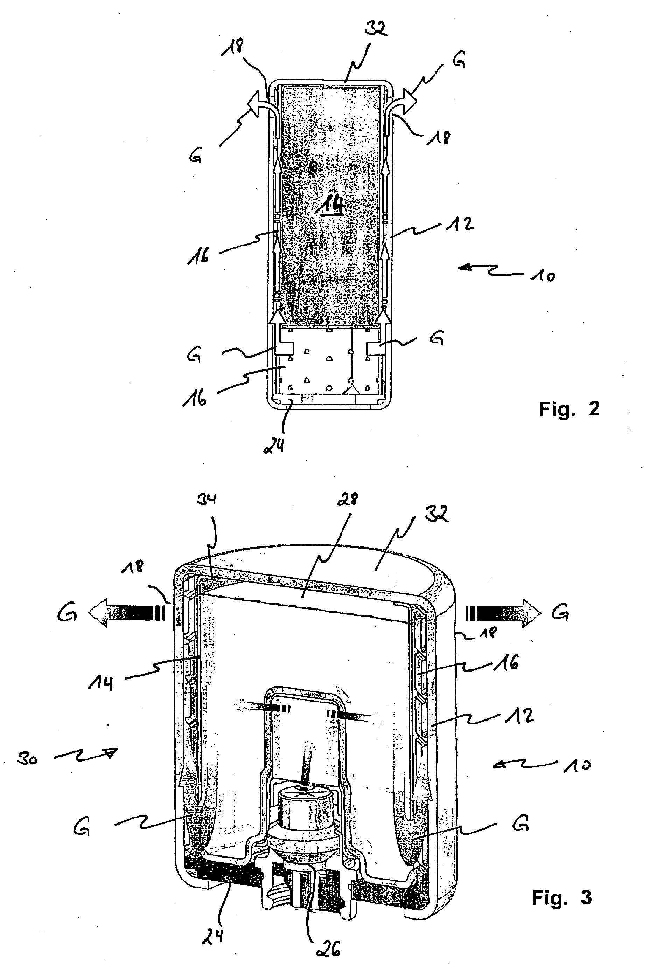

Auch die in der Fig. 2 dargestellte Gehäuseanordnung 10 bzw. der in der Fig. 3 unter Verwendung der in der Fig. 2 dargestellten Gehäuseanordnung realisierte Gasgenerator 30 weist eine konzentrische Anordnung eines hohlzylindrischen äußeren Gehäuses 12, eines inneren hohlzylindrischen Gehäuses 14 und einer ebenfalls hohlzylindrischen bzw. ringförmigen Filtereinheit 16 auf, welche zwischen dem inneren Gehäuse 14 und dem äußeren Gehäuse 12 angeordnet ist. Im Unterschied zu der Gehäuseanordnung der Fig. 1 erstreckt sich jedoch bei der Gehäuseanordnung 10 der Fig. 2 und 3 das innere Gehäuse 14 nicht über die gesamte axiale Länge des äußeren Gehäuses 12 hinweg. Vielmehr erstreckt sich das innere Gehäuse 14 nur etwa über drei Viertel der axialen Länge der Filtereinheit 16 sowie des äußeren Gehäuses 12.

Wie den Fig. 2 und 3 entnommen werden kann, ist das äußere Gehäuse 12 an seiner Unterseite durch eine massive Bodenplatte 24 begrenzt, die von dem äußeren Gehäuse 12 bzw. dessen unteren Rand umgriffen wird, welcher hierzu beispielsweise durch Bördeln umgeformt wurde. Auf der der Bodenplatte 24 gegenüberliegenden Seite ist das äußere Gehäuse 12 durch eine Stirnwand 32 begrenzt, an der das innere Gehäuse 14 über einen umgebördelten Randabschnitt 34 befestigt sein kann. Optional kann dieser umgebördelte Randabschnitt 34 des inneren Gehäuses 14 eine Kopfplatte 28 umgreifen. Auf der der Kopfplatte 28 bzw. dem umgebördelten Randabschnitt 34 des inneren Gehäuses 14 gegenüberliegenden Seite ist das innere Gehäuse 14 offen und weist insbesondere keine sich in radialer Richtung erstreckende Begrenzungsfläche auf.

Die einseitig offene Ausbildung des inneren Gehäuses 14 ermöglicht dabei, dass die Verbrennungsgase, welche bei der Verbrennung des von dein inneren Gehäuse 14 aufgenommenen Treibladung entstehen, ungehindert in den Bereich der Gehäuseanordnung 10 strömen können, in dem die Gehäuseanordnung 10 in radialer Richtung betrachtet nur das äußere Gehäuse 12 und die Filtereinheit 16 umfasst. Die Gase 16 können somit in diesem Bereich, in dem die Gehäuseanordnung 10 keine innere Gehäusewandung besitzt, über den gesamten Umfang der Filtereinheit 16 ungehindert in diese radialer Richtung eindringen und anschließend in axialer Richtung im Wesentlichen über die gesamte Länge der Gehäuseanordnung 10 zu den Ausströmöffnungen 18 des äußeren Gehäuses 12 strömen, welche sich in der dargestellten Ausführungsform in unmittelbarer Nähe der der Bodenplatte 24 gegenüberliegenden Stirnwand 32 des äußeren Gehäuses 12 befinden.

Durch die einseitig offene Ausbildung des inneren Gehäuses können die explosionsartig frei werdenden Gase G ungehindert und optimal verteilt aus dem inneren Gehäuse 14 entweichen. Anschließend werden die Gase G durch die Filtereinheit 16, welche in ihrem Aufbau der unter Bezugnahme auf die Fig. 1 beschriebenen Filtereinheit entspricht, gereinigt und gekühlt, bevor sie über die über den Umfang des äußeren Gehäuses 12 verteilten Ausströmöffnungen 18 entweichen können. Als Strömungsweg steht dabei der gesamte Umfang des Ringspalts zwischen dem inneren Gehäuse 14 und dem äußeren Gehäuse 12 zur Verfügung, wodurch die ausströmenden Gase G besonders effektiv gekühlt und gereinigt werden.

### Bezugszeichenliste

- 10: Gehäuseanordnung
- 12: äußeres Gehäuse
- 14: inneres Gehäuse
- 16: Filtereinheit
- 18: Ausströmöffnung von 12
- 20: Ausströmöffnung von 14
- 22: radiale Erweiterung von 14
- 24: Bodenplatte
- 26: Zünder
- 28: Kopfplatte
- 30: Gasgenerator
- 32: Stirnwand
- 34: umgebördelter Randabschnitt

- G: ausströmende Gase

## Patentansprüche

1. Gehäuseanordnung (10) für einen Gasgenerator, insbesondere für Luftsackmodule in Kraftfahrzeugen, umfassend:
- ein inneres, vorzugsweise zylindrisches Gehäuse (14) zur Aufnahme einer Treibladung,
- eine das innere Gehäuse (14) umfangseitig zumindest bereichsweise umgebende Filtereinheit (16), und
- ein das innere Gehäuse (14) und die Filtereinheit (16) umgebendes, vorzugsweise zylindrisches äußeres Gehäuse (12),
wobei in der Umfangswand des inneren Gehäuses (14) und in der Umfangswand des äußeren Gehäuses (12) jeweils eine Ausströmöffnung (20, 18) ausgebildet ist,
wobei die Ausströmöffnungen (18, 20) des inneren Gehäuses (14) und des äußeren Gehäuses (12) derart relativ zueinander angeordnet sind, dass die Filtereinheit (16) von den aus dem inneren Gehäuse (14) ausströmenden Gasen (G) in Umfangsrichtung der Gehäuseanordnung (10) durchströmbar ist, **dadurch gekennzeichnet, dass**
in dem Ringspalt, in dem die Filtereinheit (16) zwischen dem inneren Gehäuse (14) und dem äußeren Gehäuse (12) angeordnet ist, ein sich in axialer Richtung der Gehäuseanordnung (10) erstreckendes Strömungshindernis (22) vorgesehen und derart angeordnet ist, dass die Filtereinheit (16) von den aus dem inneren Gehäuse (14) ausströmenden Gasen (G) nur in einer Umfangsrichtung durchströmbar ist.

2. Gehäuseanordnung nach Anspruch 1,
**dadurch gekennzeichnet, dass**
die Ausströmöffnungen (20, 18) des inneren Gehäuses (14) und des äußeren Gehäuses (12) in Umfangsrichtung der Gehäuseanordnung (10) versetzt zueinander angeordnet sind.

3. Gehäuseanordnung nach Anspruch 1 oder 2,
**dadurch gekennzeichnet, dass**
die Ausströmöffnungen (20, 18) des inneren Gehäuses (14) und des äußeren Gehäuses (12) derart relativ zueinander angeordnet sind, dass die Filtereinheit (16) von den aus dem inneren Gehäuse (14) ausströmenden Gasen (G) vor dem Ausströmen aus dem äußeren Gehäuse (12) in Umfangsrichtung der Gehäuseanordnung (10) über eine Bogenlänge durchströmbar ist, welche einem Winkel von zumindest 45°, bevorzugt 90°, besonders bevorzugt 180° und insbesondere bevorzugt mehr als 200° entspricht.

4. Gehäuseanordnung nach zumindest einem der Ansprüche 1 bis 3,
**dadurch gekennzeichnet, dass**
in der Umfangswand des inneren Gehäuses (14) und in der Umfangswand des äußeren Gehäuses (12) jeweils genau eine Ausströmöffnung (20, 18) ausgebildet ist, wobei die Ausströmöffnung (20) des inneren Gehäuses (14) unter einem Winkel von 180° versetzt zu der Ausströmöffnung (18) des äußeren Gehäuses (12) angeordnet ist.

5. Gehäuseanordnung nach zumindest einem der Ansprüche 1 bis 3,
**dadurch gekennzeichnet, dass**
in der Umfangswand des inneren Gehäuses (14) und in der Umfangswand des äußeren Gehäuses (12) jeweils zwei auf gegenüberliegenden Seiten des jeweiligen Gehäuses (14, 12) befindliche Ausströmöffnungen (20, 18) ausgebildet sind, wobei die Ausströmöffnungen (20) des inneren Gehäuses (14) jeweils unter einem Winkel von 90° versetzt zu den Ausströmöffnungen (18) des äußeren Gehäuses (12) angeordnet sind.

6. Gehäuseanordnung nach Anspruch 1,
**dadurch gekennzeichnet, dass**
das Strömungshindernis (22) durch eine sich in axialer Richtung der Gehäuseanordnung (10) erstreckende radiale Erweiterung (22) des inneren Gehäuses (14) gebildet wird.

7. Gehäuseanordnung nach Anspruch 1,
**dadurch gekennzeichnet, dass**
das Strömungshindernis (22) durch einen sich in axialer Richtung der Gehäuseanordnung (10) erstreckenden Körper gebildet wird.

8. Gehäuseanordnung nach zumindest einem der vorstehenden Ansprüche,
**dadurch gekennzeichnet, dass**
die Filtereinheit (16) durch ein Streckblech bzw. -gitter oder durch ein mit rasterförmig angeordneten Ausformungen (17) versehenes Blech gebildet wird, welches einlagig in dem Ringspalt zwischen dem inneren Gehäuse (14) und dem äußeren Gehäuse (12) angeordnet ist.

9. Gehäuseanordnung nach zumindest einem der voranstehenden Ansprüche,
**dadurch gekennzeichnet, dass**
die Ausströmöffnung (20) des inneren Gehäuses (14) eine in Umfangsrichtung längliche, schlitzförmige Gestalt aufweist und sich die Ausströmöffnung (18) des äußeren Gehäuses (12) aus mehreren in axialer Richtung des äußeren Gehäuses (12) zueinander benachbarten Ausströmlöchern zusammensetzt.

10. Gehäuseanordnung (10) für einen Gasgenerator (30), insbesondere für Luftsackmodule in Kraftfahrzeugen, umfassend:
- ein inneres, vorzugsweise zylindrisches Gehäuse (14) zur Aufnahme einer Treibladung,
- eine das innere Gehäuse umfangseitig umgebende Filtereinheit (16), und
- ein das innere Gehäuse (14) und die Filtereinheit (16) umgebendes, vorzugsweise zylindrisches äußeres Gehäuse (12),
**dadurch gekennzeichnet, dass**
das innere Gehäuse (14) in axialer Richtung einseitig offen ist und in der Umfangswand des äußeren Gehäuses (12) mehrere Ausströmöffnungen (18) ausgebildet sind, welche relativ zu der offenen Seite des inneren Gehäuses (14) derart angeordnet sind, dass die Filtereinheit (16) von den aus der offenen Seite des inneren Gehäuses (12) ausströmenden Gasen (G) in axialer Richtung der Gehäuseanordnung (10) im Wesentlichen vollständig durchströmbar ist.

11. Gehäuseanordnung nach Anspruch 10,
**dadurch gekennzeichnet, dass**
das innere Gehäuse (14) in axialer Richtung eine geringere Länge als sowohl das äußere Gehäuse (12) als auch die Filtereinheit (16) aufweist.

12. Gehäuseanordnung nach Anspruch 10 oder 11,
**dadurch gekennzeichnet, dass**
das innere Gehäuse (14) auf der der offenen Seite in axialer Richtung gegenüberliegenden Seite durch einen Deckel (28) oder durch eine Stirnwand (32) des äußeren Gehäuses (12) verschlossen ist.

13. Gehäuseanordnung nach zumindest einem der Ansprüche 10 bis 12,
**dadurch gekennzeichnet, dass**
die Filtereinheit (16) durch ein Streckblech bzw. -gitter oder durch ein mit rasterförmig angeordneten Ausformungen (17) versehenes Blech gebildet wird, welches einlagig in dem Ringspalt zwischen dem inneren Gehäuse (14) und dem äußeren Gehäuse (12) angeordnet ist.

## Claims

1. Housing arrangement (10) for an inflator, in particular for air bag modules in motor vehicles, comprising:
an inner preferably cylindrical housing (14) for receiving a propellant charge,
a filter unit (16) encompassing the inner housing (14) circumferentially at least in certain areas, and
an outer, preferably cylindrical housing (12) encompassing the inner housing (14) and the filter unit (16),
wherein an exhaust opening (20, 18) is provided in the peripheral wall of the inner housing (14) and in the peripheral wall of the outer housing (12), respectively,
wherein the exhaust openings (20, 18) of the inner housing (14) and the outer housing (12) are arranged relative to each other such that gases (G) flowing from the inner housing (14) can flow through the filter unit (16) in circumferential direction of the housing arrangement (10),
**characterized in that**
in an annular gap, in which the filter unit (16) is arranged between the inner housing (14) and the outer housing (12), a flow obstacle (22) is provided extending in an axial direction of the housing arrangement (10) and arranged such that gases (G) flowing from the inner housing (14) can flow through the filter unit (16) only in one circumferential direction.

2. Housing arrangement according to claim 1,
**characterized in that**
the exhaust openings (20, 18) of the inner housing (14) and of the outer housing (12) are arranged offset in the circumferential direction of the housing arrangement (10).

3. Housing arrangement according to claim 1 or 2,
**characterized in that**
the exhaust openings (20, 18) of the inner housing (14) and of the outer housing (12) are arranged relative to each other such that gases (G) flowing from the inner housing (14), prior to flowing out from the outer housing (12), can flow through the filter unit (16) in circumferential direction of the housing arrangement (10) in an arc length corresponding to an angle of at least 45°, preferably 90°, more preferably 180° and even more preferably more than 200°.

4. Housing arrangement according to at least one of the claims 1 to 3,
**characterized in that**
exactly one exhaust opening (20, 18) is provided in the peripheral wall of the inner housing (14) and in the peripheral wall of the outer housing (12), respectively, wherein the exhaust opening (20) of the inner housing (14) is arranged offset to the exhaust opening (18) of the outer housing (12) at an angle of 180°.

5. Housing arrangement according to at least one of the claims 1 to 3,
**characterized in that**
two exhaust openings (20, 18) are provided in the peripheral wall of the inner housing (14) and in the peripheral wall of the outer housing (12), respectively, located on opposite sides of the respective housing (14, 12), wherein the exhaust openings (20) of the inner housing (14) are arranged offset to the exhaust openings (18) of the outer housing (12) at an angle of 90°.

6. Housing arrangement according to claim 1,
**characterized in that**
the flow obstacle (22) is formed of a radial expansion (22) of the inner housing (14) extending in axial direction of the housing arrangement (10).

7. Housing arrangement according to claim 1,
**characterized in that**
the flow obstacle (22) is formed of a body extending in axial direction of the housing arrangement (10).

8. Housing arrangement according to at least one of the preceding claims,
**characterized in that**
the filter unit (16) is formed of an expanded metal or grid, respectively, or of a metal sheet provided with grid-like recesses (17), which is provided in one layer in the annular gap between the inner housing (14) and the outer housing (12).

9. Housing arrangement according to at least one of the preceding claims,
**characterized in that**
the exhaust opening (20) of the inner housing (14) has an elongated slotted shape in circumferential direction and the exhaust opening (18) of the outer housing (12) is comprised of several exhaust openings adjacent to each other in axial direction of the outer housing (12).

10. Housing arrangement (10) for an inflator (30), in particular for air bag modules in motor vehicles, comprising:
an inner, preferably cylindrical housing (14) for receiving a propellant charge,
a filter unit (16) encompassing the inner housing (14) circumferentially, and
an outer, preferably cylindrical housing (12) encompassing the inner housing (14) and the filter unit (16),
**characterized in that**
the inner housing (14) is open on one side in axial direction and a plurality of exhaust openings (18) is provided in the peripheral wall of the outer housing (12) arranged relative to the open side of the inner housing (14) such that gases (G) flowing from the open side of the inner housing (14) can flow essentially fully through the filter unit (16) in axial direction of the housing arrangement (10).

11. Housing arrangement according to claim 10,
**characterized in that**
the inner housing (14) has a shorter length in axial direction than both the outer housing (12) and the filter unit (16).

12. Housing arrangement according to claim 10 or 11,
**characterized in that**
the inner housing (14) is sealed on the side opposite the open side in axial direction by a lid (28) or by an end wall (32) of the outer housing (12).

13. Housing arrangement according to at least one of the claims 10 to 12,
**characterized in that**
the filter unit (16) is formed of an expanded metal or grid, respectively, or of a metal sheet provided with grid-like recesses (17), which is provided in one layer in the annular gap between the inner housing (14) and the outer housing (12).

## Revendications

1. Agencement de boîtier (10) pour un générateur de gaz, en particulier pour des modules d'airbag dans des véhicules automobiles, comprenant :
- un boîtier intérieur (14), de préférence cylindrique, pour recevoir une charge de propulseur,
- une unité de filtre (16) qui entoure au moins par secteur le boîtier intérieur (14) du côté périphérique, et
- un boîtier extérieur (12), de préférence cylindrique, qui entoure le boîtier intérieur (14) et l'unité de filtre (16),
dans lequel une ouverture d'échappement respective (20, 18) est réalisée dans la paroi périphérique du boîtier intérieur (14) et dans la paroi périphérique du boîtier extérieur (12),
dans lequel les ouvertures d'échappement (18, 20) du boîtier intérieur (14) et du boîtier extérieur (12) sont agencées l'une par rapport à l'autre d'une manière telle que l'unité de filtre (16) peut être traversée dans la direction périphérique de l'agencement de boîtier (10) par les gaz (G) qui s'échappent hors du boîtier intérieur (14),
**caractérisé en ce que**
dans l'intervalle annulaire, dans lequel est agencée l'unité de filtre (16) entre le boîtier intérieur (14) et le boîtier extérieur (12), il est prévu un obstacle à l'écoulement (22) qui s'étend en direction axiale de l'agencement de boîtier (10) et qui est agencé de telle façon que l'unité de filtre (16) peut être traversée par les gaz (G) qui s'écoulent hors du boîtier intérieur (14) uniquement dans une direction périphérique.

2. Agencement de boîtier selon la revendication 1,
**caractérisé en ce que** les ouvertures d'échappement (20, 18) du boîtier intérieur (14) et du boîtier extérieur (12) sont agencées en décalage l'une par rapport à l'autre dans la direction périphérique de l'agencement de boîtier (10).

3. Agencement de boîtier selon la revendication 1 ou 2,
**caractérisé en ce que** les ouvertures d'échappement (20, 18) du boîtier intérieur (14) et du boîtier extérieur (12) sont agencées l'une par rapport à l'autre de telle manière que l'unité de filtre (16) peut être traversée par les gaz (G) qui s'écoule hors du boîtier intérieur (14), avant leur écoulement hors du boîtier extérieur (12), dans la direction périphérique de l'agencement de boîtier (10) sur une longueur d'arc qui correspond à un angle d'au moins 45°, de préférence 90°, de façon particulièrement préférée 180°, et en particulier de préférence de plus de 200°.

4. Agencement de boîtier selon l'une au moins des revendications 1 à 3,
**caractérisé en ce que**, dans la paroi périphérique du boîtier intérieur (14) et dans la paroi périphérique du boîtier extérieur (12), il est formé à chaque fois exactement une ouverture d'échappement (20, 18), telles que l'ouverture d'échappement (20) du boîtier intérieur (14) est agencée en décalage d'un angle de 180° par rapport à l'ouverture d'échappement (18) du boîtier extérieur (12).

5. Agencement de boîtier selon l'une au moins des revendications 1 à 3,
**caractérisé en ce que**, dans la paroi périphérique du boîtier intérieur (14) et dans la paroi périphérique du boîtier extérieur (12), il est formé à chaque fois deux ouvertures d'échappement (20, 18) qui se trouvent sur des côtés opposés du boîtier respectif (14, 12), telles que les ouvertures d'échappement (20) du boîtier intérieur (14) sont agencées respectivement en décalage d'un angle de 90° par rapport aux ouvertures d'échappement (18) du boîtier extérieur (12).

6. Agencement de boîtier selon la revendication 1,
**caractérisé en ce que** l'obstacle à l'écoulement (22) est formé par un élargissement radial (22) du boîtier intérieur (14), élargissement qui s'étend en direction axiale de l'agencement de boîtier (10).

7. Agencement de boîtier selon la revendication 1,
**caractérisé en ce que** l'obstacle à l'écoulement (22) est formé par un corps qui s'étend en direction axiale de l'agencement de boîtier (10).

8. Agencement de boîtier selon l'une au moins des revendications précédentes,
**caractérisé en ce que** l'unité de filtre (16) est formée par une tôle ou par un grillage déployé, ou par une tôle dotée de reliefs (17) agencés en forme de trame, qui est disposée sur une seule couche dans l'intervalle annulaire entre le boîtier intérieur (14) et le boîtier extérieur (12).

9. Agencement de boîtier selon l'une au moins des revendications précédentes,
**caractérisé en ce que** l'ouverture d'échappement (20) du boîtier intérieur (14) présente une configuration allongée en direction périphérique, semblable à une fente, et **en ce que** l'ouverture d'échappement (18) du boîtier extérieur (12) se compose de plusieurs trous d'échappement voisins les uns des autres en direction axiale du boîtier extérieur (12).

10. Agencement de boîtier (10) pour un générateur de gaz (30), en particulier pour des modules d'airbag dans des véhicules automobiles, comprenant :
- un boîtier intérieur (14) de préférence cylindrique pour recevoir une charge de propulseur,
- une unité de filtre (16) qui entoure le boîtier intérieur du côté périphérique, et
- un boîtier extérieur (12) de préférence cylindrique qui entoure le boîtier intérieur (14) et l'unité de filtre (16),
**caractérisé en ce que** le boîtier intérieur (14) est ouvert d'un côté en direction axiale et plusieurs ouvertures d'échappement (18) sont ménagées dans la paroi périphérique du boîtier extérieur (12), et sont agencées par rapport aux côtés ouverts du boîtier intérieur (14) de telle façon que l'unité de filtre (16) peut être traversé sensiblement totalement en direction axiale de l'agencement de boîtier (10) par les gaz (G) qui s'échappent hors du côté ouvert du boîtier intérieur (12).

11. Agencement de boîtier selon la revendication 10,
**caractérisé en ce que** le boîtier intérieur (14) présente en direction axiale une longueur plus faible que le boîtier extérieur (12) et que l'unité de filtre (16).

12. Agencement de boîtier selon la revendication 10 ou 11,
**caractérisé en ce que** le boîtier intérieur (14) est refermé, sur le côté opposé au côté ouvert en direction axiale, par un couvercle (28) ou par une paroi frontale (32) du boîtier extérieur (12).

13. Agencement de boîtier selon l'une au moins des revendications 10 à 12,
**caractérisé en ce que** l'unité de filtre (16) est formée par une tôle ou par un grillage déployé, ou par une tôle dotée de reliefs (17) agencés en forme de trame, qui est disposée sur une seule couche dans l'intervalle annulaire entre le boîtier intérieur (14) et le boîtier extérieur (12).
